(19) Europäisches Patentamt
European Patent Office
Office européen des brevets

(11) **EP 3 358 763 B1**

(12) **EUROPEAN PATENT SPECIFICATION**

(45) Date of publication and mention
of the grant of the patent:
**10.03.2021 Bulletin 2021/10**

(51) Int Cl.:
*H04B 13/00* (2006.01)          *H04B 1/10* (2006.01)
*H04B 5/02* (2006.01)          *H04B 15/00* (2006.01)

(21) Application number: **16851219.2**

(86) International application number:
**PCT/JP2016/077401**

(22) Date of filing: **16.09.2016**

(87) International publication number:
**WO 2017/057045 (06.04.2017 Gazette 2017/14)**

(54) **RECEPTION DEVICE AND METHOD, TRANSMISSION DEVICE AND METHOD, AND COMMUNICATION SYSTEM**

EMPFANGSVORRICHTUNG UND -VERFAHREN, SENDEVORRICHTUNG UND -VERFAHREN UND KOMMUNIKATIONSSYSTEM

DISPOSITIF ET PROCÉDÉ DE RÉCEPTION, DISPOSITIF ET PROCÉDÉ D'ÉMISSION, ET SYSTÈME DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2015 JP 2015196111**

(43) Date of publication of application:
**08.08.2018 Bulletin 2018/32**

(73) Proprietor: **Sony Corporation**
**Tokyo 108-0075 (JP)**

(72) Inventors:
• **UNO Masahiro**
**Tokyo 108-0075 (JP)**
• **TANAKA Katsuyuki**
**Tokyo 108-0075 (JP)**
• **KONDO Fumitaka**
**Tokyo 108-0075 (JP)**
• **TANAKA Masayuki**
**Fujisawa-shi**
**Kanagawa 251-0042 (JP)**

(74) Representative: **MFG Patentanwälte**
**Meyer-Wildhagen Meggle-Freund**
**Gerhard PartG mbB**
**Amalienstraße 62**
**80799 München (DE)**

(56) References cited:
**JP-A- 2006 324 775      JP-A- 2013 135 269**
**JP-A- 2013 135 269      US-A1- 2004 092 296**

## Description

Technical Field

The present disclosure relates to a receiving device and method, a transmitting device and method, and a communication system, and more particularly to a receiving device and method, a transmitting device and method, and a communication system, which are capable of reducing pulse noise.

Background Art

Electric field communication is a communication scheme using an electric field variation unlike wireless communication using an electromagnetic wave. As disclosed in Patent Document 1, a transmitter causes a peripheral electric field to vary by causing a voltage to be applied to a transmission electrode to be changed in accordance with data desired to be transmitted, and a receiver detects a variation in a peripheral electric field thereof from a potential difference variation occurring between reception electrodes and estimates transmitted data.

As a standardization standard of this communication scheme, there are ISO/IEC 17982 closed capacitive coupling communication physical layer edition 1 and IEEE 802.15.6 human body communication. Signal formats and the like are different, but a transmission principle is similar to the method described above.

In both standards, a transmission signal band is from near a direct current to several tens of megahertz (MHz). On the other hand, a transmission distance is about 1 to 2 m at most. In other words, since the transmission distance is extremely short with respect to a wavelength of a transmission signal, it is called near field transmission. Using this fact, although the transmission distance is short, for example, an application in which, as disclosed in IEEE 802.15.6 Annex D, if a human body comes into contact with a transmission electrode and a reception electrode, the human body is charged in accordance with a signal, and signal transmission in which the human body serves a transmission medium is performed is considered.

There are many noise sources in the transmission signal band. Examples of the noise source include 50/60 Hz commercial power supplies, fluorescent lamps, LCD displays, switching power supplies, other digital circuits, and the like. The noise interferes with the electric field communication and degrades a communication quality. A technique in which a wide band pass filter and a low band pass filter are installed in a reception circuit in order to reduce the interference has been proposed.

However, although the wide band pass filter and the low band pass filter are installed, there is a limit to a feasible band restriction. This is because the band restriction simultaneously distorts a signal waveform, causes inter-symbol interference, and causes a code transmission error.

On the other hand, there is a high possibility that a noise spectrum will be also included in the signal band. Particularly, in a case in which the present electric field communication system is installed in a digital device such as a multifunctional mobile phone, since an LCD display and other digital circuits of the multifunctional mobile phone are in an extremely close range, an interference level of noise generated in the LCD display and other digital circuits is very high and has a great influence on a quality of electric field communication.

As a proposal for reducing the noise, a differential amplifier may be employed in the reception circuit. In a case in which the noise is mixed into a differential amplifier circuit ground in a common mode, since the noise has the same phase and the same amplitude, the noise is expected not to appear in an output of the differential amplifier.

JP 2013-135269 A relates to a wireless communication terminal that transmits a non-inverted modulation signal and an inverted modulation signal by using two antennas; a differential amplifier outputs a difference between an output signal from a variable gain amplifier; and a monitor/separation control part obtains the gain which minimizes a variation of an amplitude of the output signal from the differential amplifier.

Citation List

Patent Literature

Patent Document 1: JP 4501073B

Disclosure of Invention

Technical Problem

However, in a case in which one reception electrode is brought into contact with the human body to detect the electric field signal near the human body, a noise signal level d(n) input to the electrode significantly changes as compared with a noise signal level y(n) of the other electrode. Therefore, since the noise input to the differential amplifier does not have the same phase and the same amplitude, and $E[d_j^2] > E[y_j^2]$ is held, large noise appears in the differential amplifier output, and thus the communication quality degrades.

The present disclosure was made in light of the foregoing, and it is desirable to be able to reduce the pulse noise.

Solution to Problem

According to a first solution, the invention provides a receiving device in accordance with independent claim 1. According to a second solution, the invention provides a receiving method in accordance with independent claim 9. According to a third solution, the invention provides a communication system in accordance with independent claim 10. Further aspects of the invention are set forth in the dependent claims, the drawings and the following description.

A receiving device according to a first aspect of the present technology includes: a pair of reception electrodes configured to receive a signal of a peripheral electric field varied by a transmitting device configured to cause a voltage to be applied to a pair of transmission electrodes to be changed and transmit data; a variable gain amplifier configured to amplify a signal from one of the reception electrodes; a differential amplifier configured to output a difference between a signal from the other of the reception electrodes and a signal from the variable gain amplifier; and a gain control unit configured to control a gain of the variable gain amplifier in accordance with an amplitude of an output signal from the differential amplifier and an amplitude of the signal from the other of the reception electrodes.

The gain control unit can control the gain of the variable gain amplifier in an interval in which there is no signal according to communication.

The gain control unit can control the gain of the variable gain amplifier in an interval in which there is no signal according to communication before communication is performed.

The gain control unit may include an integrator.

The gain control unit can control the gain of the variable gain amplifier through signal processing.

One of the pair of reception electrodes can receive the signal of the peripheral electric field varied by the transmitting device in a state in which the one of the pair of reception electrodes is close to or comes into close contact with one of the pair of transmission electrodes and a human body.

The pair of reception electrodes can receive the signal of the peripheral electric field varied by the transmitting device in a state in which the pair of reception electrodes is close to the pair of transmission electrodes.

A receiving method according to the first aspect of the present technology includes: receiving, by a pair of reception electrodes, a signal of a peripheral electric field varied by a transmitting device configured to cause a voltage to be applied to a pair of transmission electrodes to be changed and transmit data; amplifying, by a variable gain amplifier, a signal from one of the reception electrodes; outputting, by a differential amplifier, a difference between a signal from the other of the reception electrodes and a signal from the variable gain amplifier; and controlling, by a gain control unit, a gain of the variable gain amplifier in accordance with an amplitude of an output signal from the differential amplifier and an amplitude of the signal from the other of the reception electrodes.

A communication system according to a third aspect of the present technology includes: a transmitting device including a pair of transmission electrodes, and a transmitter configured to cause a voltage to be applied to the pair of transmission electrodes to be changed and transmit data; and a receiving device including a pair of reception electrodes configured to receive a signal of a peripheral electric field varied by the transmitting device, a variable gain amplifier configured to amplify a signal from one of the reception electrodes, a differential amplifier configured to output a difference between a signal from the other of the reception electrodes and a signal from the variable gain amplifier, and a gain control unit configured to control a gain of the variable gain amplifier in accordance with an amplitude of an output signal from the differential amplifier and an amplitude of the signal from the other of the reception electrodes.

In the first aspect of the present technology, a signal of a peripheral electric field varied by a transmitting device configured to cause a voltage to be applied to a pair of transmission electrodes to be changed and transmit data is received by a pair of reception electrodes, a signal from one of the reception electrodes is amplified by a variable gain amplifier, a difference between a signal from the other of the reception electrodes and a signal from the variable gain amplifier is output by a differential amplifier, and a gain of the variable gain amplifier is controlled by a gain control unit in accordance with an amplitude of an output signal from the differential amplifier and an amplitude of the signal from the other of the reception electrodes.

In the second aspect of the present technology, a peripheral electric field is varied by a pair of transmission electrodes, the peripheral electric field enabling a pair of reception electrodes of a receiving device to receive a signal, the receiving device including the pair of reception electrodes configured to receive a signal of the peripheral electric field, a variable gain amplifier configured to amplify a signal from one of the reception electrodes, a differential amplifier configured to output a difference between a signal from the other of the reception electrodes and a signal from the variable gain amplifier, and a gain control unit configured to control a gain of the variable gain amplifier in accordance with an amplitude of an output signal from the differential amplifier and an amplitude of the signal from the other of the reception electrodes; and a voltage to be applied to the pair of transmission electrodes is caused to be changed and data is transmitted by a transmitter.

Advantageous Effects of Invention

According to the present technology, it is possible to reduce the pulse noise.

Further, the effect described in this specification is merely an example, and the effect of the present technology is not limited to the effect described in this specification and may have an additional effect.

Brief Description of Drawings

[FIG. 1] FIG. 1 is a schematic configuration example of an electric field communication system.

[FIG. 2] FIG. 2 is a block diagram illustrating a configuration example of a receiving device of FIG. 1.

[FIG. 3] FIG. 3 is a diagram for describing electric field communication in a case in which a human body is used.

[FIG. 4] FIG. 4 is a diagram illustrating an example of an electric field communication system to which the present technology is applied.

[FIG. 5] FIG. 5 is a block diagram illustrating a configuration example of a receiving device of FIG. 4.

[FIG. 6] FIG. 6 is a block illustrating a configuration example of an amplitude control circuit of FIG. 5.

[FIG. 7] FIG. 7 is a diagram for describing a no signal interval.

[FIG. 8] FIG. 8 is a flowchart for describing a process of a transmitting device.

[FIG. 9] FIG. 9 is a flowchart for describing a process of a receiving device.

[FIG. 10] FIG. 10 is a block diagram illustrating a configuration example of a personal computer.

Mode(s) for Carrying Out the Invention

Hereinafter, a mode (hereinafter referred to as an "embodiment") for carrying out the present disclosure will be described.

<Schematic configuration example of electric field communication system>

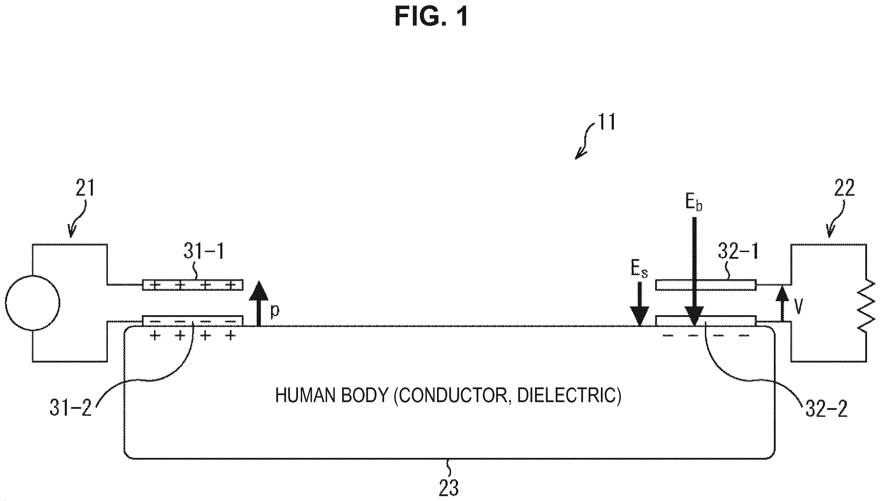

FIG. 1 is a diagram illustrating a schematic configuration example of an electric field communication system.

In the example of FIG. 1, an electric field communication system 11 includes a transmitting device 21, a receiving device 22, and a human body 23. The transmitting device 21 includes transmission electrodes 31-1 and 31-2 which are a pair of two electrodes. The receiving device 22 includes reception electrodes 32-1 and 32-2 which are a pair of two electrodes. In the example of FIG. 1, the human body 23 is used as a conductor or a dielectric.

Electric field communication is a communication scheme using an electric field variation unlike wireless communication using an electromagnetic wave. As illustrated in FIG. 1, the transmitting device 21 causes a peripheral electric field to vary by causing a voltage to applied to the transmission electrodes 31-1 and 31-2 to be changed in accordance with data to be transmitted so that an alternating (polarity switching) dipole indicated by "p" is formed. The human body 23 is charged in accordance with the electric field. The receiving device 22 detects a variation in the peripheral electric field from a voltage V (potential difference variation) generated between the two reception electrodes 32-1 and 32-2 and estimates transmitted data.

"p" is an alternating dipole vector and indicates whether the dipole in which plus and minus are switched is strong or weak.

As a standardization standard of this communication scheme, there are ISO/IEC 17982 closed capacitive coupling communication physical layer edition 1 and IEEE 802.15.6 human body communication. Signal formats and the like are different, but a transmission principle is similar to the method described above. In both standards, a transmission signal band is from near a direct current to several tens of megahertz (MHz). On the other hand, a transmission distance is about 1 to 2 m at most. In other words, since the transmission distance is extremely short with respect to a wavelength of a transmission signal, it is called near field transmission.

In other words, in a case in which a distance is as short as about 10 cm, it is possible to detect the variation in the peripheral electric field without a special transmission medium, and in the example of FIG. 1, an example in which the transmission distance is short, but for example, as disclosed in IEEE 802.15.6 Annex D, the human body 23 is used as a transmission medium is illustrated. Further, in the example of FIG. 1, an example in which the transmission electrode 31-2 and the reception electrode 32-2 come into contact with the human body 23 is illustrated.

In the example of FIG. 1, the human body 23 is charged by bringing the transmission electrode 31-2 and the reception electrode 32-2 into contact with the human body 23, and an electric field Eb is generated. Therefore, the receiving device 22 detects the electric field variation of the human body 23 from the voltage V (potential difference variation) generated between the two reception electrodes 32-1 and 32-2 and estimates the transmitted data.

There are many noise sources in the transmission signal band. Examples of the noise source include 50/60 Hz commercial power supplies, fluorescent lamps, LCD displays, switching power supplies, other digital circuits, and the like. The noise includes an electric field and a magnetic field. As illustrated in FIG. 1, since an electric field Es of the noise is received together with the electric field Eb of the signal, the electric field communication is interfered, leading to degradation in the communication quality. A technique in which a wide band pass filter and a low band pass filter are installed in a reception circuit in order to reduce the interference has been proposed.

However, in the electric field communication, there is a limit to a feasible band restriction although the wide band pass filter and the low band pass filter are installed. This is because the band restriction simultaneously distorts a signal waveform, causes inter-symbol interference, and causes a code transmission error.

On the other hand, there is a high possibility that a noise spectrum will be also included in the signal band. Particularly, in a case in which the electric field communication system is installed in a digital device such as a multifunctional mobile phone, since an LCD display and other digital circuits of the multifunctional mobile phone are in an extremely close range, an interference level of noise generated in the LCD display and other digital circuits is very high and has a great influence on a quality of electric field communication.

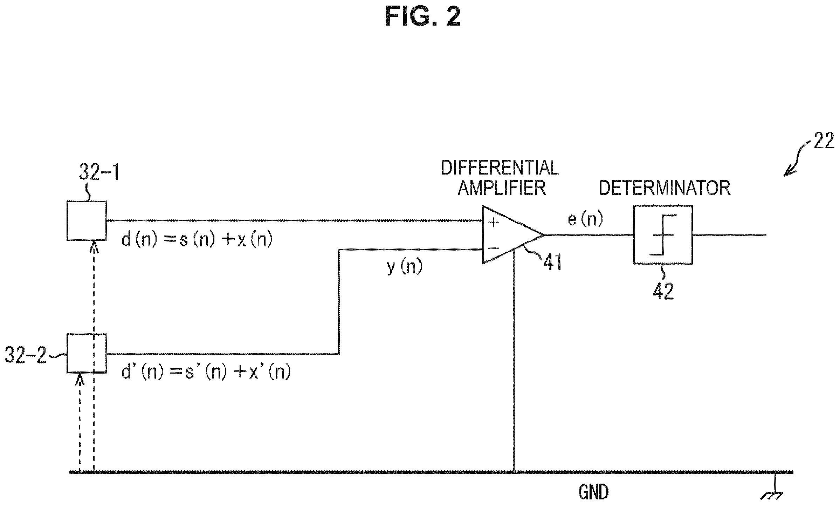

As a proposal for reducing the noise, a differential amplifier 41 may be employed in the receiving device 22 as illustrated in FIG. 2. In the example of FIG. 2, the receiving device 22 includes a differential amplifier 41 and a determinator 42. The differential amplifier 41 receives input of a signal level d(n) from the reception electrode 32-1 and a signal level y(n) (= d'(n)) from the reception electrode 32-2 and outputs a signal level e(n) corresponding to a difference in a potential difference occurring between the differential amplifier 41 and a circuit ground (GND) to the determinator 42. The determinator 42 compares a voltage of the input signal with a predetermined threshold value, and outputs 1 or 0 as reception data in accordance with a result. For example, in a case in which the voltage of the input signal exceeds the threshold value, 1 is output, and in a case in which the voltage is less than the threshold value, 0 is output.

In this proposal, in a case in which the noise is mixed into the circuit ground (GND) in a common mode, since the noise has the same phase and the same amplitude, the noise is expected not to appear in an output of the differential amplifier.

However, a case in which one reception electrode is brought into contact with the human body to detect the electric field signal near the human body is considered.

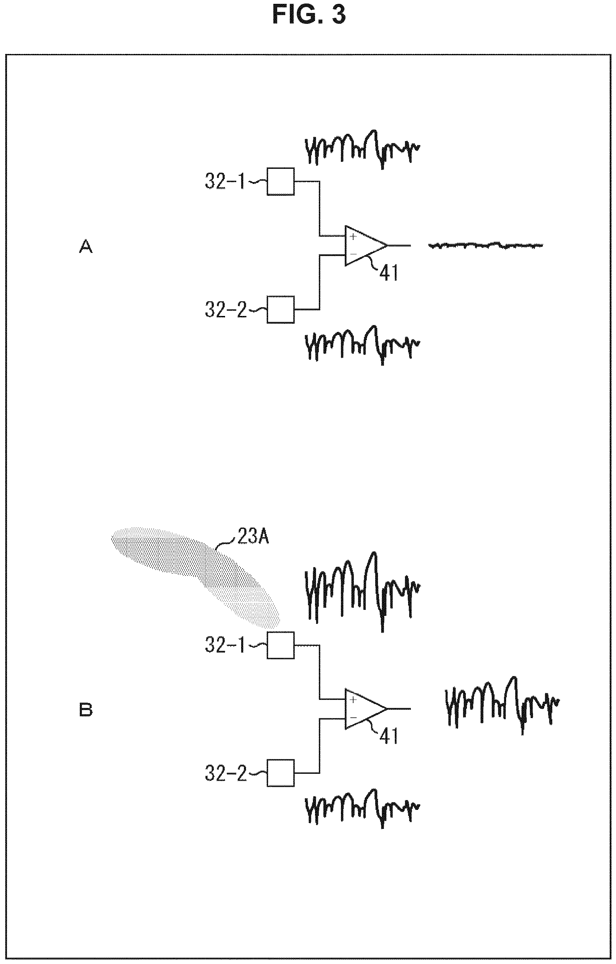

For example, A of FIG. 3 illustrates an example in which a noise is input from the reception electrodes 32-1 and 32-2 to the differential amplifier 41 with the same phase. B of FIG. 3 illustrates an example in which the reception electrode is brought into contact with a human body is illustrated. As illustrated in B of FIG. 3, in a case in which one reception electrode (for example, the reception electrode 32-1) is brought into contact with the human body (a finger 23 A), the noise signal level d(n) input to the electrode greatly changes as compared with the noise signal level y(n) input to the other electrode.

Therefore, since the noise input to the differential amplifier 41 does not have the same phase and the same amplitude, and $E[d_j^2]>E[y_j^2]$ is held, large noise appears in the differential amplifier output, and thus the communication quality degrades.

<Configuration example of electric field communication system of present technology>

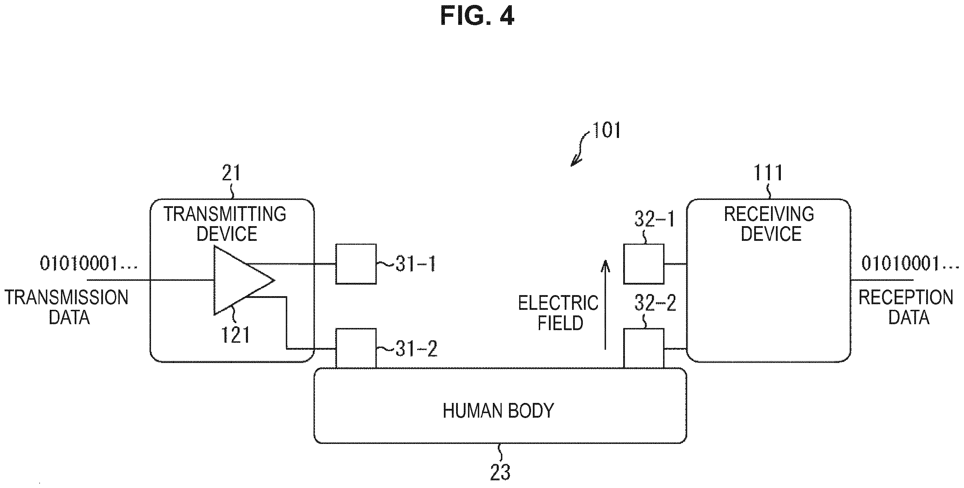

FIG. 4 is a block diagram illustrating a configuration example of an electric field communication system to which the present technology is applied. Further, parts corresponding to those in the example of FIG. 1 are denoted by corresponding reference numerals. In the example of FIG. 4, the example in which the human body 23 is used as a medium is illustrated, but if the distance is as short as about 10 cm, it is possible to detect the variation in the peripheral electric field without a special transmission medium such as the human body 23.

In the example of FIG. 4, an electric field communication system 101 includes a transmitting device 21 including a pair of transmission electrodes 31-1 and 31-2, a receiving device 111 including a pair of reception electrodes 32-1 and 32-2, and a human body 23. Further, in the example of FIG. 4, the example in which the transmission electrode 31-2 and the reception electrode 32-2 come into contact with the human body 23 is illustrated. Further, for example, the transmitting device 21 and the receiving device 111 are configured to be portable or wearable on an arm, a neck, or the like. Alternatively, transmitting device 21 and receiving device 111 are configured to be pushed with a foot such as a mat.

The transmitting device 21 includes a transmission driver 121. The transmission driver 121 applies a voltage corresponding to input transmission data between the transmission electrodes 31-1 and 31-2. The transmission electrodes 31-1 and 31-2 to which the voltage is applied form an electric field on a surrounding space and the human body 23.

A potential difference occurs between the reception electrodes 32-1 and 32-2 due to an electric field generated near the reception electrodes 32-1 and 32-2. The receiving device 111 amplifies a signal from one electrode (in the example of FIG. 4, the reception electrode 32-2 coming into contact with the human body 23), and outputs a difference between a result and a signal from the other electrode (in the example of FIG. 4, the reception electrode 32-1). Further, the receiving device 111 sets gain of an amplifier that amplifies one signal using the output difference and one signal.

The receiving device 111 further compares the voltage of the output difference (the input signal) with a predetermined threshold value, and outputs 1 or 0 as reception data in accordance with a result. For example, in a case in which the voltage of the input signal exceeds the threshold value, 1 is output, and in a case in which the voltage is less than the threshold value, 0 is output.

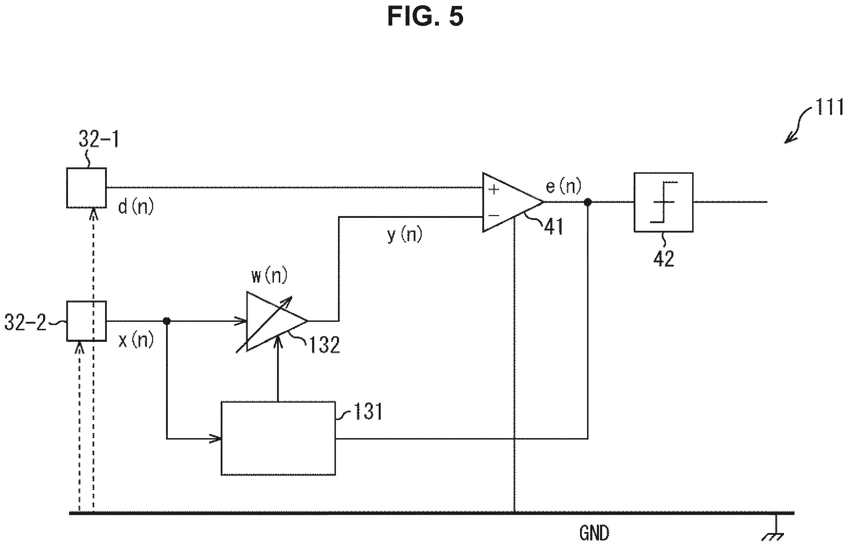

FIG. 5 is a block diagram illustrating a configuration example of the receiving device.

The receiving device 111 is similar to the receiving device 22 of FIG. 2 in that it includes the reception electrodes 32-1 and 32-2, a differential amplifier 41, and a determinator 42. The receiving device 111 is different from the receiving device 22 of FIG. 2 in that an amplitude control circuit 131 and a variable gain amplifier 132 are added.

In other words, a signal x(n) from the reception electrode 32-2 is input to the variable gain amplifier 132 and the amplitude control circuit 131. The amplitude control circuit 131 controls an input amplitude using a digital signal processing algorithm that sets a gain w(n) of the variable gain amplifier 132 using the signal x(n) from the reception electrode 32-2 and an output signal amplitude from the differential amplifier 41. An example in which least mean square (LMS) is used as the digital signal processing algorithm will be described below.

The variable gain amplifier 132 amplifies the signal x(n) from the reception electrode 32-2 coming into contact with the human body 23, and outputs an amplified signal y(n) to the differential amplifier 41. The differential amplifier 41 receives input of the signal d(n) from the reception electrode 32-1 and the signal y(n) from the variable gain amplifier 132, and outputs a differential signal e(n) to the determinator 42.

For the sake of simplicity, a discrete time (n) is first considered. A no signal interval in which there is no signal transmitted from transmitting device 21 is set. At this time, only a noise appears in the reception electrode. At this time, the differential amplifier 41 outputs the signal e(n) corresponding to a difference in a potential difference generated between each of the two reception electrodes and the circuit ground (GND) to the determinator 42. e(n) is indicated by the following Formula (1).

[Math. 1]

$$e(n) = d(n) - y(n) = d(n) - w^T x(n) \qquad \cdots (1)$$

Here, w and x are vectors, w(n) is a n-dimensional weight coefficient, and x(n) is an n-dimensional noise voltage.

Further, e(n) indicates an output voltage of the differential amplifier 41, d(n) indicates a voltage from the reception electrode 32-1, and y(n) indicates a voltage obtained by amplifying the voltage of the reception electrode 32-2 through the variable gain amplifier 132.

Here, a noise component of d(n) is canceled, that is, reduced by y(n) by adjusting a weight coefficient of the variable gain amplifier 132. An index J for the noise reduction is indicated by the following Formula (2).

[Math. 2]

$$J = E[e(n)^2] = E\left[(d(n) - w^T x(n))^2\right] = E[d(n)^2] - 2p^T w + w^T R w$$
$$\cdots (2)$$

Here, p=E[d(n)x(n)], R=E[x(n)x(n)$^T$], and E[] are statistical averages. Since Formula (2) is a quadratic form with respect to w, the optimal solution is obtained when $\partial J/\partial w = 0$. Further, p is a vector, and R is a matrix.

In other words,

[Math. 3]

$$w = R^{-1} p \qquad \cdots (3)$$

, and the optimal solution is obtained by repeating the following Formula (4).

[Math. 4]

$$w(n+1) = w(n) + 2\mu e(n) x(n) \qquad \cdots (4)$$

In the present embodiment, both w(n) and x(n) are one-dimensional. Therefore, the following Formula (5) is obtained.
[Math. 5]

$$w(n+1) = w(n) + 2\mu e(n) x(n) \qquad \cdots (5)$$

Formula (5) above is converted into a continuous-time system. z transform of Formula (5) is indicated by the following Formula (6).
[Math. 6]

$$zW(z) = W(z) + 2\mu E(z) X(z) \qquad \cdots (6)$$

The LMS algorithm has been described above. Here, a relation between a z region and an s region is $z=e^{sT}$, and thus the following Formula (7) is obtained.
[Math. 7]

$$e^{sT}W(e^{sT}) = W(e^{sT}) + 2\mu E(e^{sT}) X(e^{sT}) \qquad \cdots (7)$$

Further, it can be written as $e^{sT}=1+Ts+(Ts)^2/2!+(Ts)^3/3!+...=1+Ts$, $(T \to 0)$, and thus the following Formula (8) is obtained.
[Math. 8]

$$W(s) = \frac{2\mu E(s) X(s)}{e^{sT}-1} \approx \frac{2\mu E(s) X(s)}{Ts} \qquad \cdots (8)$$

If Formula (8) is transformed into a form of a time t by performing inverse Laplace transformation, the following Formula (9) is obtained.
[Math. 9]

$$w(t) = k \int_0^t x(\tau) e(\tau) d\tau \qquad \cdots (9)$$

The above-described operation is used as an algorithm. Specifically, an integrator is used. As described above, it is possible to reduce the noise signal amplitude of the output of the differential amplifier 41 caused by the same phase noise signal input to the two reception electrodes by controlling the amplitude control circuit 131 in accordance with the signal amplitude of the output of the differential amplifier 41 (specifically, so that the signal amplitude is minimized).

Further, in the above description, the least mean square (LMS) algorithm of the continuous-time system has been described as an example. Further, in the present technology, the algorithm is not limited to this example. Further, an implementation in a discrete time system is also possible.

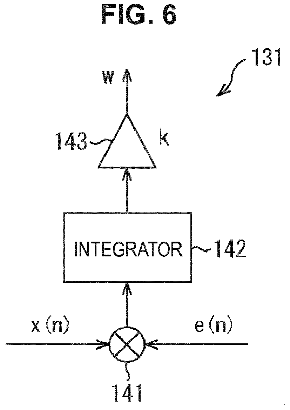

FIG. 6 is a diagram illustrating an example in which the amplitude control circuit 131 includes an integrator as an implementation example of the LMS algorithm.

The amplitude control circuit 131 includes a multiplier 141, an integrator 142, and an amplifier 143.

The multiplier 141 multiplies the signal x(n) from the reception electrode 32-2 by the output signal amplitude from the differential amplifier 41 and the e(n) amplitude, and outputs a multiplication result to the integrator 142. The integrator 142 integrates the multiplication result obtained by the multiplier 141 and outputs an integration result to the amplifier 143. The amplifier 143 supplies a weight coefficient w which is a result of amplifying an integrated value using a coefficient k to the variable gain amplifier 132.

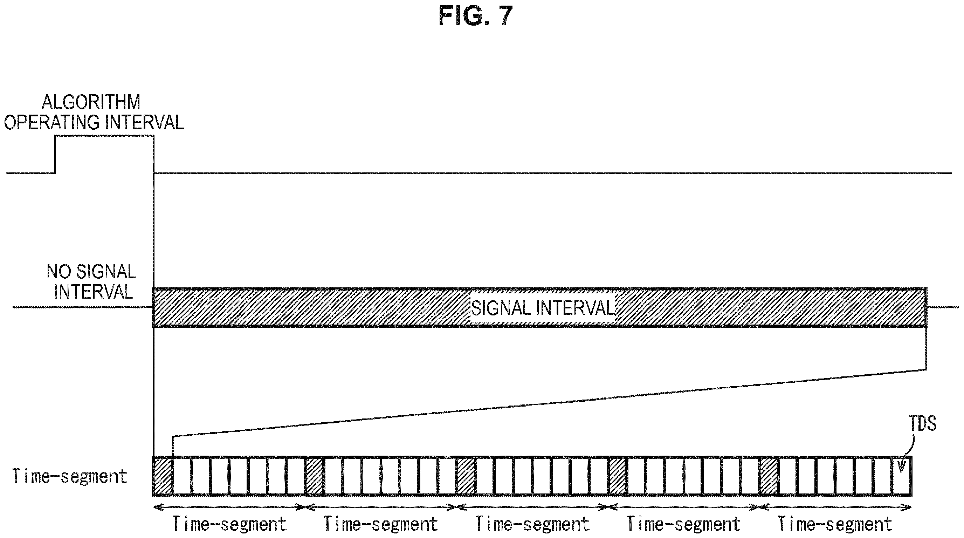

Further, there is a method of deciding an operation time of an algorithm as a non-transmission interval. For example, in the case of an ISO/IEC 17982 system, time division slots (TDSs) and time-segments are defined as illustrated in FIG. 7.

There is 8 TDSs in one time-segment. If one TDS is assumed to be allocated to one transmission/reception pair, in a case in which there is no other communication device, the remaining seven TDS intervals become a no signal state. In other words, according to the standard, a transmission signal is transmitted intermittently.

In this regard, the signal processing (algorithm) of the present technology is performed, for example, immediately before the signal interval before communication is performed, and thus an optimal gain is set in the variable gain amplifier in the communication state. The state of noise depends not only on an arrangement of the reception electrode 32-1 and the reception electrode 32-2 but also on a contact condition with the human body. Therefore, since a situation is considered to vary over time, it is appropriate to operate the process of the present technology immediately before the signal interval before communicating is performed as described above.

<Process example of electric field communication system of present technology>

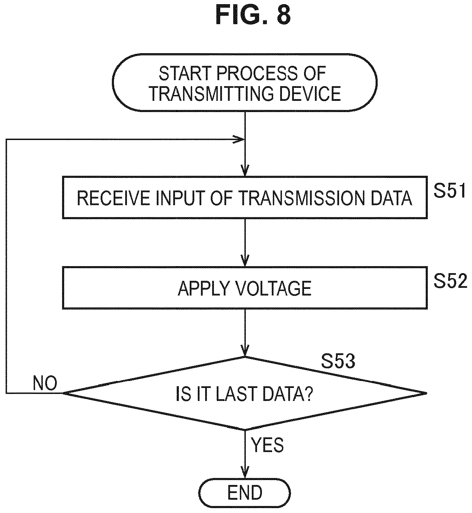

Next, a process of the transmitting device 21 will be described with reference to a flowchart of FIG. 8.

In step S51, the transmission driver 121 receives input of transmission data, and in step S52, the transmission driver 121 applies a voltage corresponding to the input transmission data between the transmission electrodes 31-1 and 31-2.

The transmission electrodes 31-1 and 31-2 to which the voltage is applied form an electric field on a surrounding space and the human body 23.

In step S53, the transmission driver 121 determines whether or not the input transmission data is last data. In a case in which it is determined in step S53 that the input transmission data is not the last data, the process returns to step S51, and the subsequent processes are repeated.

In a case in which it is determined in step S53 that the input transmission data is the last data, the process of the transmitting device 21 ends.

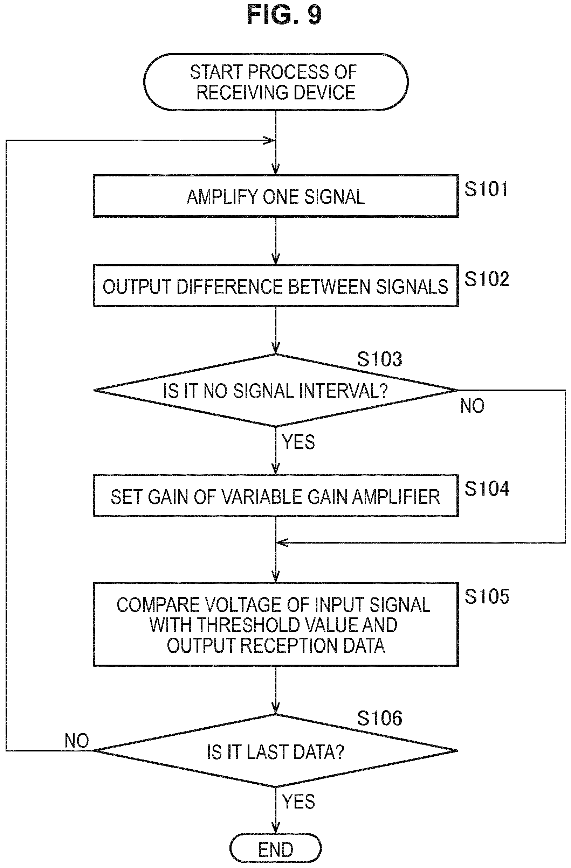

Next, a process of the receiving device 22 will be described with reference to a flowchart of FIG. 9.

A potential difference is generated between the reception electrodes 32-1 and 32-2 due to an electric field generated near the reception electrodes 32-1 and 32-2.

In step S101, the variable gain amplifier 132 amplifies the signal x(n) from one signal (reception electrode 32-2) and outputs the amplified signal y(n) to the differential amplifier 41. The other signal (the signal d(n) from the reception electrode 32-1) is also input to the variable gain amplifier 132.

In step S102, the differential amplifier 41 outputs the difference between the signal d(n) from the reception electrode 32-1 and the signal y(n) amplified by the variable gain amplifier 132 to the determinator 42 and the amplitude control circuit 131.

In step S103, the amplitude control circuit 131 determines whether or not a current TDS interval is the no signal interval. In a case in which it is determined in step S103 that the current TDS interval is the no signal interval, the process proceeds to step S104. In step S104, the amplitude control circuit 131 sets the gain of the variable gain amplifier 132.

In a case in which it is determined in step S103 that the current TDS interval is not the no signal interval, step S104 is skipped, and the process proceeds to step S105.

In step S105, the determinator 42 compares the voltage of the input signal with a predetermined threshold value, and outputs 1 or 0 as reception data in accordance with a result. For example, in a case in which the voltage of the input signal exceeds the threshold value, 1 is output, and in a case in which the voltage is less than the threshold value, 0 is output.

In step S106, the variable gain amplifier 132 determines whether or not the signal (data) from the reception electrode 32-2 is the last data. In a case in which it is determined in step S106 that the signal (data) from the reception electrode 32-2 is not the last data, the process returns to step S101, and the subsequent processes are repeated. In a case in which it is determined in step S106 that the signal (data) from the reception electrode 32-2 is the last data, the process of the receiving device ends.

As described above, according to the present technology, since the gain of the variable gain amplifier is set, it is possible to reduce the pulse noise which is unable to be reduced through a low band pass filter, a high band pass filter, or the like.

Accordingly, the communication quality can be improved. Since electronic devices such as multifunctional mobile phones in which an electric field communication system is likely to be installed generate a large number of pulse noise, a great effect can be obtained.

Particularly, it is possible to reduce the influence of the pulse noise on the receiving device of the electric field communication system. Specifically, it is possible to prevent a loss of desired signal information and a deterioration in a signal strength which are caused by a saturation of an amplifier or an AGC circuit following the pulse noise.

According to the present technology, since the pulse noise having the wide band is reduced, it is possible to increase the band of the transmission signal. Accordingly, it is possible to increase the speed of the electric field communication.

Further, a degree of freedom for an electrode arrangement in electric field telegraphy is obtained. In general, it is preferable that the electrode arrangement in the electric field communication be performed so that the performance of the electric field communication is obtained, but, on the other hand, it is necessary to satisfy restrictive conditions on a product design, for example, a design or other part arrangements, and the electrode need not be necessarily placed at a position at which the pulse noise is low.

According to the present technology, since such pulse noise can be reduced, the degree of design freedom increases.

<Personal computer>

A series of processes described above can be executed by hardware or by software. In a case in which a series of processing is executed by software, a program constituting the software is installed in a computer. Here, examples of the computer include a computer incorporated into dedicated hardware and a general-purpose personal computer which is capable of executing various kinds of functions in accordance with various kinds of installed programs.

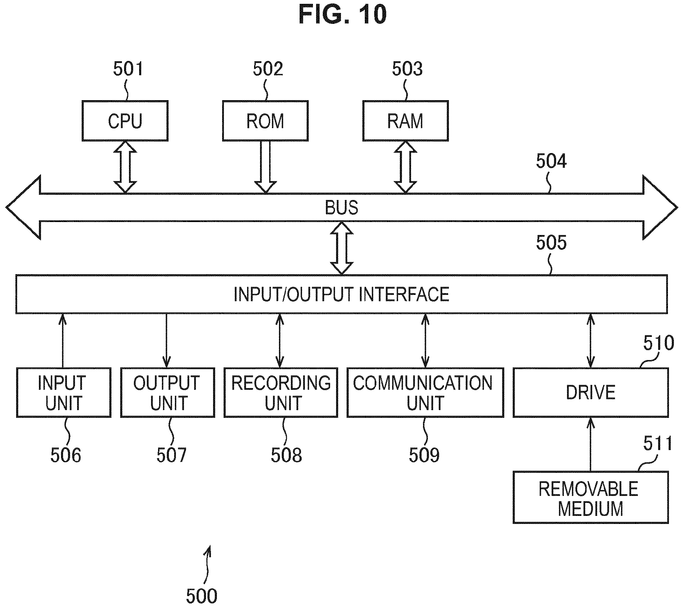

FIG. 10 is a block diagram illustrating a configuration example of hardware of a personal computer that executes a series of processes described above in accordance with a program.

In a personal computer 500, a central processing unit (CPU) 501, a read only memory (ROM) 502, and a random access memory (RAM) 503 are connected to one another via a bus 504.

An input/output interface 505 is further connected to the bus 504. An input unit 506, an output unit 507, a storage unit 508, a communication unit 509, and a drive 510 are connected to the input/output interface 505.

The input unit 506 includes a keyboard, a mouse, a microphone, or the like. The output unit 507 includes a display, a speaker, or the like. The storage unit 508 includes a hard disk, a nonvolatile memory, or the like. The communication unit 509 includes a network interface or the like. The drive 510 drives a removable medium 511 such as a magnetic disk, an optical disk, a magneto optical disk, or a semiconductor memory.

In the personal computer 500 configured as described above, for example, the CPU 501 loads a program stored in the storage unit 508 onto the RAM 503 via the input/output interface 505 and the bus 504 and executes the program. Accordingly, a series of processes described above is performed.

The program executed by the computer (CPU 501) can be recorded in the removable medium 511 and provided. For example, the removable medium 511 is a package medium including a magnetic disk (including a flexible disk), an optical disk (a compact disc-read only memory (CD-ROM), a digital versatile disc (DVD), or the like), a magneto optical disk, a semiconductor memory, or the like. Further, alternatively, the program may be provided via a wired or wireless transmission medium such as a local area network, the Internet, or digital satellite broadcasting.

In the computer, the removable medium 511 may be loaded into the drive 510, and the program may be installed in the storage unit 508 via the input/output interface 505. Further, the program may be received by the communication unit 509 via a wired or wireless transmission medium and installed in the storage unit 508. Furthermore, the program may be installed in the ROM 502 or the storage unit 508 in advance.

Note that the program executed by the computer may be a program in which processes are carried out in a time series in the order described in this specification or may be a program in which processes are carried out in parallel or at necessary timings, such as when the processes are called.

Further, in this specification, steps in which the program to be recorded in the recording medium is written do not necessarily have to be performed in time series in line with the order of the steps, and instead may include processing that is performed in parallel or individually.

Further, in this specification, "system" refers to a whole device including a plurality of devices.

Not that an embodiment of the disclosure is not limited to the embodiments described above, and various changes and modifications may be made without departing from the scope of the disclosure.

Further, an element described as a single device (or a processing unit) above may be divided and configured as a plurality of devices (or processing units). On the contrary, elements described as a plurality of devices (or processing units) above may be configured collectively as a single device (or a processing unit). Further, an element other than those described above may be added to each device (or a processing unit). Furthermore, a part of an element of a given device (or a processing unit) may be included in an element of another device (or another processing unit) as long as the configuration or operation of the system as a whole is substantially the same. In other words, an embodiment of the disclosure is not limited to the embodiments described above, and various changes and modifications may be made without departing from the scope of the disclosure.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

**EP 3 358 763 B1**

Reference Signs List

| 11 | electric field communication system |
|----|----|
| 21 | transmitting device |
| 22 | receiving device |
| 23 | human body |
| 31-1, 31-2 | transmission electrode |
| 32-1, 32-2 | reception electrode |
| 41 | differential amplifier |
| 42 | determinator |
| 101 | electric field communication system |
| 111 | receiving device |
| 121 | transmission driver |
| 131 | amplitude control circuit |
| 132 | variable gain amplifier |
| 141 | multiplier |
| 142 | integrator |
| 143 | amplifier |

**Claims**

**1.** A receiving device (111), comprising:

a pair of reception electrodes (32-1, 32-2) configured to receive a signal of a peripheral electric field varied by a transmitting device (21) configured to cause a voltage to be applied to a pair of transmission electrodes (31-1, 31-2) to be changed and transmit data;
a variable gain amplifier (132) configured to amplify a signal from a first reception electrode (32-2) of the pair of reception electrodes (32-1, 32-2);
a differential amplifier (41) configured to output a difference between a signal from the second reception electrode (32-1) of the pair of reception electrodes (32-1, 32-2) and a signal from the variable gain amplifier (132); and
a gain control unit (131) configured to control a gain of the variable gain amplifier (132) in accordance with an amplitude of an output signal (e(n)) from the differential amplifier (41) and an amplitude of the signal from the first (32-2) of the pair of reception electrodes (32-1, 32-2), wherein the signal from the first reception electrode (32-2) of the pair of reception electrodes (32-1, 32-2) is input to the variable gain amplifier (132) and to the gain control unit (131).

**2.** The receiving device (111) according to claim 1,
wherein the gain control unit is configured to control the gain of the variable gain amplifier (132) in an interval in which there is no signal according to communication.

**3.** The receiving device (111) according to claim 2,
wherein the gain control unit is configured to control the gain of the variable gain amplifier (132) in an interval in which there is no signal according to communication before communication is performed.

**4.** The receiving device (111) according to claim 1,
wherein the gain control unit includes an integrator (142).

**5.** The receiving device (111) according to claim 1,
wherein the gain control is configured to control the gain of the variable gain amplifier (132) through signal processing.

**6.** The receiving device (111) according to claim 1,
wherein the gain control unit is confgiured to control the gain of the variable gain amplifier (132) such that the amplitude of the output signal from the differential amplifier (41) is minimized.

**7.** The receiving device (111) according to claim 1,

wherein the first reception electrode (32-2) of the pair of reception electrodes (32-1, 32-2) receives the signal of the peripheral electric field varied by the transmitting device (21) in a state in which the first reception eletrode (32-2) of the pair of reception electrodes (32-1, 32-2) is close to or comes into close contact with the second transmission electrode (31-2) of the pair of transmission electrodes (31-1, 31-2) and a human body (23).

8. The receiving device (111) according to claim 1,
wherein the pair of reception electrodes (32-1, 32-2) receives the signal of the peripheral electric field varied by the transmitting device (21) in a state in which the pair of reception electrodes (32-1, 32-2) is close to the pair of transmission electrodes (31-1, 31-2).

9. A receiving method, comprising:

receiving, by a pair of reception electrodes (32-1, 32-2), a signal of a peripheral electric field varied by a transmitting device (21) configured to cause a voltage to be applied to a pair of transmission electrodes (31-1, 31-2) to be changed and transmit data;
amplifying, by a variable gain amplifier (132), a signal from a first reception electrode (32-2) of the pair of reception electrodes (32-1, 32-2);
outputting, by a differential amplifier (41), a difference between a signal from the second reception electrode (32-1) of the pair of reception electrodes (32-1, 32-2) and a signal from the variable gain amplifier (132); and
controlling, by a gain control unit (131), a gain of the variable gain amplifier (132) in accordance with an amplitude of an output signal (e(n)) from the differential amplifier (41) and an amplitude of the signal from the first reception electrode (32-2) of the pair of reception electrodes (32-1, 32-2), wherein the signal from the first reception electrode (32-2) of the pair of reception electrodes (32-1, 32-2) is input to the variable gain amplifier (132) and to the gain control unit (131).

10. A communication system, comprising:

a transmitting device (21) comprising a pair of transmission electrodes (31-1, 31-2) configured to cause a peripheral electric field to vary and a transmitter (21) configured to cause a voltage to be applied to the pair of transmission electrodes (31-1, 31-2) to be changed and transmit data; and
a receiving device (111) according to claim 1.

**Patentansprüche**

1. Empfangsvorrichtung (111), die Folgendes umfasst:

ein Paar Empfangselektroden (32-1, 32-2), ausgelegt zum Empfangen eines Signals eines peripheren elektrischen Feldes, verändert durch eine Sendevorrichtung (21), dazu ausgelegt zu veranlassen, dass eine Spannung, die an ein Paar Sendeelektroden (31-1, 31-2) angelegt werden soll, geändert wird, und Daten zu senden;
einen Verstärker mit variabler Verstärkung (132), ausgelegt zum Verstärken eines Signals von einer ersten Empfangselektrode (32-2) des Paares Empfangselektroden (32-1, 32-2);
ein Differenzialverstärker (41), ausgelegt zum Ausgeben einer Differenz zwischen einem Signal von der zweiten Empfangselektrode (32-1) des Paares Empfangselektroden (32-1, 32-2) und einem Signal vom Verstärker mit variabler Verstärkung (132); und
eine Verstärkungssteuerungseinheit (131), ausgelegt zum Steuern einer Verstärkung des Verstärkers mit variabler Verstärkung (132) in Übereinstimmung mit einer Amplitude eines Ausgangssignals (e(n)) vom Differenzialverstärker (41) und einer Amplitude des Signals von der ersten (32-2) des Paares Empfangselektroden (32-1, 32-2), wobei das Signal von der ersten Empfangselektrode (32-2) des Paares Empfangselektroden (32-1, 32-2) in den Verstärker mit variabler Verstärkung (132) und in die Verstärkungssteuerungseinheit (131) eingegeben wird.

2. Empfangsvorrichtung (111) nach Anspruch 1,
wobei die Verstärkungssteuerungseinheit ausgelegt ist zum Steuern der Verstärkung des Verstärkers mit variabler Verstärkung (132) in einem Intervall, in dem es kein Signal entsprechend der Kommunikation gibt.

3. Empfangsvorrichtung (111) nach Anspruch 2,
wobei die Verstärkungssteuerungseinheit ausgelegt ist zum Steuern der Verstärkung des Verstärkers mit variabler Verstärkung (132) in einem Intervall, in dem es kein Signal entsprechend der Kommunikation gibt, bevor Kommunikation durchgeführt wird.

4. Empfangsvorrichtung (111) nach Anspruch 1,
   wobei die Verstärkungssteuerungseinheit einen Integrator (142) umfasst.

5. Empfangsvorrichtung (111) nach Anspruch 1,
   wobei die Verstärkungssteuerung dazu ausgelegt ist, die Verstärkung des Verstärkers mit variabler Verstärkung (132) durch Signalverarbeitung zu steuern.

6. Empfangsvorrichtung (111) nach Anspruch 1,
   wobei die Verstärkungssteuerungseinheit ausgelegt ist zum Steuern der Verstärkung des Verstärkers mit variabler Verstärkung (132), sodass die Amplitude des Ausgangssignals vom Differenzialverstärker (41) minimiert ist.

7. Empfangsvorrichtung (111) nach Anspruch 1,
   wobei die erste Empfangselektrode (32-2) des Paares Empfangselektroden (32-1, 32-2) das Signal des peripheren elektrischen Feldes, verändert durch die Sendevorrichtung (21), in einem Zustand empfängt, in dem die erste Empfangselektrode (32-2) des Paares Empfangselektroden (32-1, 32-2) nahe bei der zweiten Sendeelektrode (31-2) des Paares Sendeelektroden (31-1, 31-2) und einem menschlichen Körper (23) ist oder in engen Kontakt damit kommt.

8. Empfangsvorrichtung (111) nach Anspruch 1,
   wobei das Paar Empfangselektroden (32-1, 32-2) das Signal des peripheren elektrischen Feldes, verändert durch die Sendevorrichtung (21), in einem Zustand empfängt, in dem das Paar Empfangselektroden (32-1, 32-2) nahe bei dem Paar Sendeelektroden (31-1, 31-2) ist.

9. Empfangsverfahren, das Folgendes umfasst:

   Empfangen, durch ein Paar Empfangselektroden (32-1, 32-2), eines Signals eines peripheren elektrischen Feldes, verändert durch eine Sendevorrichtung (21), dazu ausgelegt zu veranlassen, dass eine Spannung, die an ein Paar Sendeelektroden (31-1, 31-2) angelegt werden soll, geändert wird, und Daten zu senden;
   Verstärken, durch einen Verstärker mit variabler Verstärkung (132), eines Signals von einer ersten Empfangselektrode (32-2) des Paares Empfangselektroden (32-1, 32-2);
   Ausgeben, durch einen Differenzialverstärker (41), einer Differenz zwischen einem Signal von der zweiten Empfangselektrode (32-1) des Paares Empfangselektroden (32-1, 32-2) und einem Signal vom Verstärker mit variabler Verstärkung (132); und
   Steuern, durch eine Verstärkungssteuerungseinheit (131), einer Verstärkung des Verstärkers mit variabler Verstärkung (132) in Übereinstimmung mit einer Amplitude eines Ausgangssignals (e(n)) vom Differenzialverstärker (41) und einer Amplitude des Signals von der ersten Empfangselektrode (32-2) des Paares Empfangselektroden (32-1, 32-2), wobei das Signal von der ersten Empfangselektrode (32-2) des Paares Empfangselektroden (32-1, 32-2) in den Verstärker mit variabler Verstärkung (132) und in die Verstärkungssteuerungseinheit (131) eingegeben wird.

10. Kommunikationssystem, das Folgendes umfasst:

    eine Sendevorrichtung (21); umfassend ein Paar Sendeelektroden (31-1, 31-2), dazu ausgelegt, ein peripheres elektrisches Feld zu veranlassen, sich zu ändern, und einen Sender (21), dazu ausgelegt zu veranlassen, dass eine Spannung, die an das Paar Sendeelektroden (31-1, 31-2) angelegt werden soll, geändert wird, und Daten zu senden; und
    eine Empfangsvorrichtung (111) nach Anspruch 1.

**Revendications**

1. Dispositif de réception (111) comprenant :
   une paire d'électrodes de réception (32-1, 32-2) configurées pour recevoir un signal d'un champ électrique périphérique varié par un dispositif d'émission (21) configuré pour amener une tension à appliquer à une paire d'électrodes d'émission (31-1, 31-2) à être modifiée et transmettre des données :

un amplificateur à gain variable (132) configuré pour amplifier un signal provenant d'une première électrode de réception (32-2) de la paire d'électrodes de réception (32-1, 32-2);

un amplificateur différentiel (41) configuré pour sortir une différence entre un signal provenant de la seconde électrode de réception (32-1) de la paire d'électrodes de réception (32-1, 32-2) et un signal provenant de l'amplificateur à gain variable (132); et

une unité de commande de gain (131) configurée pour commander un gain de l'amplificateur à gain variable (132) en fonction d'une amplitude d'un signal de sortie (e(n)) provenant de l'amplificateur différentiel (41) et d'une amplitude du signal provenant de la première électrode (32-2) de la paire d'électrodes de réception (32-1, 32-2), dans lequel le signal provenant de la première électrode de réception (32-2) de la paire d'électrodes de réception (32-1, 32-2) est entré dans l'amplificateur à gain variable (132) et dans l'unité de commande de gain (131) .

2. Dispositif de réception (111) selon la revendication 1,
   dans lequel l'unité de commande de gain est configurée pour commander le gain de l'amplificateur à gain variable (132) dans un intervalle dans lequel il n'y a pas de signal selon la communication.

3. Dispositif de réception (111) selon la revendication 2,
   dans lequel l'unité de commande de gain est configurée pour commander le gain de l'amplificateur à gain variable (132) dans un intervalle dans lequel il n'y a pas de signal selon la communication avant qu'une communication soit effectuée.

4. Dispositif de réception (111) selon la revendication 1,
   dans lequel l'unité de commande de gain comprend un intégrateur (142).

5. Dispositif de réception (111) selon la revendication 1,
   dans lequel la commande de gain est configurée pour commander le gain de l'amplificateur à gain variable (132) par le biais d'un traitement de signal.

6. Dispositif de réception (111) selon la revendication 1,
   dans lequel l'unité de commande de gain est configurée pour commander le gain de l'amplificateur à gain variable (132) de telle sorte que l'amplitude du signal de sortie de l'amplificateur différentiel (41) est minimisée.

7. Dispositif de réception (111) selon la revendication 1,
   dans lequel la première électrode de réception (32-2) de la paire d'électrodes de réception (32-1, 32-2) reçoit le signal du champ électrique périphérique varié par le dispositif d'émission (21) dans un état dans lequel la première électrode de réception (32-2) de la paire d'électrodes de réception (32-1, 32-2) est proche de ou vient en contact étroit avec la seconde électrode d'émission (31-2) de la paire d'électrodes d'émission (31-1, 31-2) et un corps humain (23).

8. Dispositif de réception (111) selon la revendication 1,
   dans lequel la paire d'électrodes de réception (32-1, 32-2) reçoit le signal du champ électrique périphérique varié par le dispositif d'émission (21) dans un état dans lequel la paire d'électrodes de réception (32-1, 32-2) est proche de la paire d'électrodes d'émission (31-1, 31-2).

9. Procédé de réception, comprenant de :
   recevoir, par une paire d'électrodes de réception (32-1, 32-2), un signal d'un champ électrique périphérique varié par un dispositif d'émission (21) configuré pour amener une tension à appliquer à une paire d'électrodes d'émission (31-1, 31-2) à être modifiée et transmettre des données :

   amplifier, par un amplificateur à gain variable (132), un signal provenant d'une première électrode de réception (32-2) de la paire d'électrodes de réception (32-1, 32-2) ;

   sortir, par un amplificateur différentiel (41), une différence entre un signal provenant de la seconde électrode de réception (32-1) de la paire d'électrodes de réception (32-1, 32-2) et un signal provenant de l'amplificateur à gain variable (132), et

   commander, par une unité de commande de gain (131), un gain de l'amplificateur à gain variable (132) en fonction d'une amplitude d'un signal de sortie (e(n)) provenant de l'amplificateur différentiel (41) et d'une amplitude du signal provenant de la première électrode de réception (32-2) de la paire d'électrodes de réception (32-1, 32-2), dans lequel le signal de la première électrode de réception (32-2) de la paire d'électrodes de réception (32- 1, 32-2) est entré dans l'amplificateur à gain variable (132) et dans l'unité de commande de gain (131) .

10. Système de communication comprenant :

un dispositif d'émission (21) comprenant une paire d'électrodes d'émission (31-1, 31-2) configurées pour faire varier un champ électrique périphérique et un émetteur (21) configuré pour amener une tension à appliquer à la paire d'électrodes d'émission (31-1, 31-2) à être modifiée et transmettre des données; et
un dispositif de réception (111) selon la revendication 1.

**FIG. 1**

EP 3 358 763 B1

## FIG. 2

EP 3 358 763 B1

# FIG. 3

# FIG. 4

EP 3 358 763 B1

FIG. 5

## FIG. 6

**FIG. 7**

ALGORITHM OPERATING INTERVAL

NO SIGNAL INTERVAL

SIGNAL INTERVAL

TDS

Time-segment

Time-segment · Time-segment · Time-segment · Time-segment · Time-segment · Time-segment

# FIG. 8

```
          ┌─────────────────────────┐
          │   START PROCESS OF      │
          │  TRANSMITTING DEVICE    │
          └─────────────────────────┘
                      │
    ┌─────────────────┼
    │                 ▼
    │    ┌───────────────────────────────────────┐
    │    │ RECEIVE INPUT OF TRANSMISSION DATA    │ S51
    │    └───────────────────────────────────────┘
    │                 │
    │                 ▼
    │    ┌───────────────────────────────────────┐
    │    │          APPLY VOLTAGE                │ S52
    │    └───────────────────────────────────────┘
    │                 │
    │                 ▼           S53
    │           ◇───────────────◇
    │  NO      ◇  IS IT LAST DATA?  ◇
    └──────────◇───────────────◇
                      │ YES
                      ▼
                 ┌─────────┐
                 │   END   │
                 └─────────┘
```

22

# FIG. 9

START PROCESS OF
RECEIVING DEVICE

AMPLIFY ONE SIGNAL — S101

OUTPUT DIFFERENCE BETWEEN SIGNALS — S102

S103
IS IT NO SIGNAL INTERVAL? — NO

YES

SET GAIN OF VARIABLE GAIN AMPLIFIER — S104

COMPARE VOLTAGE OF INPUT SIGNAL
WITH THRESHOLD VALUE AND
OUTPUT RECEPTION DATA — S105

S106
NO — IS IT LAST DATA?

YES

END

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013135269 A
- JP 4501073 B